# EUROPÄISCHE PATENTSCHRIFT

(11) **EP 0 857 960 B1**
(45) Veröffentlichungstag und Bekanntmachung des Hinweises auf die Patenterteilung: **23.04.2003**
(21) Anmeldenummer: 97103187.7
(22) Anmeldetag: 27.02.1997
(51) Int. Cl.: G01M 17/013, G01B 5/255

(54) **Achsmesshalter zur Befestigung eines Messkopfes an einer Felge eines Fahrzeugrades**
Axle measuring support for fixing a sensor head on the rim of a vehicle wheel
Support de mesure d'axes pour fixer une tête de sonde à une jante d'une roue de véhicule

(30) Priorität: 05.02.1997 DE 19704163
(43) Veröffentlichungstag der Anmeldung: 12.08.1998
(60) Teilanmeldung: 02012971.4
(73) Patentinhaber: Warkotsch, Horst, 30938 Burgwedel (DE)
(72) Erfinder: Ohnesorge, Axel, 30938 Burgwedel (DE)
(74) Vertreter: Leine, Sigurd, Dipl.-Ing.

(56) Entgegenhaltungen:
- EP-A- 0 312 636
- DE-A- 3 016 835
- DE-A- 3 330 316
- DE-A- 3 614 738
- US-A- 5 299 664
- PATENT ABSTRACTS OF JAPAN vol. 012, no. 436 (P-787), 17.November 1988 & JP 63 165705 A (HONDA MOTOR CO LTD), 9.Juli 1988,

## Beschreibung

Die Erfindung betrifft einen Achsmeßhalter der im Oberbegriff des Anspruchs 1 genannten Art zur Befestigung eines Meßkopfes an einer Felge eines Fahrzeugrades.

Durch die Firmendruckschrift "PROVAC", Edition 1996, der Firma Siège Social et Agence France Sud, 16 Première rue, Zl-BP 127 - 13744 Vitrolles cedex ist ein Achsmeßhalter der betreffenden Art bekannt. Er weist einen Grundkörper auf, der aus zwei parallel verlaufenden Stangen besteht, an deren Enden sich Anlageköpfe zur Anlage an einer Felge eines Fahrzeugrades befinden. An den Stangen befinden sich zwei diametral gegenüberliegend angeordnete Arme, die an ihren radial nach außen weisenden Enden jeweils Haken zum Einhaken in ein Profil des Reifens aufweisen. Die radial nach innen gerichteten Enden der Arme sind jeweils mittels eines Drehlagers an einem von dem Grundkörper im wesentlichen axial weg weisenden Ende eines einarmigen Hebels angelenkt, dessen anderes Ende über ein Gelenk mit einer Halterung verbunden ist, die an den Stangen angeordnet ist. Auf die Arme wirken radial nach innen Federn ein. Mittels Spannmitteln sind die einarmigen Hebel nach innen spannbar. Beim Spannen werden so die einarmigen Hebel nach innen geschwenkt und dabei die angelenkten radial inneren Enden der Arme radial nach innen bewegt. Dadurch werden auch die Haken an den Enden der Arme radial nach innen bewegt, so daß sich die Haken in das Profil eines Reifens einhaken. Da die Drehlager der Arme in einer Ebene liegen, die axial entfernt von der Ebene ist, in der sich die Haken befinden, wird beim Spannen mit den Spannmitteln nicht nur eine radiale, sondern jeweils auch eine axiale Kraft erzeugt, die den Grundkörper gegen die Felge zieht.

Ein Nachteil dieses bekannten Achsmeßhalters besteht darin, daß vor und bei dem Spannen die Arme und damit auch die Haken nicht symmetriert sind, sich also in einer undefinierten Schwenklage befinden. Dadurch besteht die Gefahr, daß die Haken sich nicht in der gleichen, zur Achse senkrechten Ebene einhaken mit der Folge, daß der Achsmeßhalter nicht in der ordnungsgemäßen Axiallage an die Felge gezogen wird, wobei gleichzeitig die axiale Zugkraft der Arme unterschiedlich ist. Auf diese Weise können Meßfehler entstehen, was nur teilweise durch ein kontrolliertes Ansetzen des Achsmeßhalters von Hand unter genauer Kontrolle der Einhakorte der Haken vermieden werden kann. Diese Handhabung ist darüber hinaus umständlich.

Der Erfindung liegt die Aufgabe zugrunde, einen Achsmeßhalter der im Oberbegriff des Anspruchs 1 genannten Art zu schaffen, der einfach zu handhaben ist und trotzdem eine exakte Positionierung und Anlage des Achsmeßhalters an der Felge eines Fahrzeugrades ermöglicht.

Die der Erfindung zugrundeliegende Aufgabe wird durch die im Kennzeichen des Anspruchs 1 angegebene Lehre gelöst.

Der Grundgedanke dieser Lehre besteht darin, für die einarmigen Hebel in jeder Spannlage eine in bezug zu dem Zentrum des Achsmeßhalters symmetrische Ausrichtung sicherzustellen, indem zwei Federn gleicher Stärke und Charakteristik vorgesehen sind, die sich an einem zentralen Punkt des Grundkörpers abstützen und außerdem radial nach außen gegen die einarmigen Hebel drücken. Dadurch erhalten die Spannmittel in jeder Spannlage eine symmetrische Lage in bezug zu dem zentralen Punkt und damit zu der Achse des Achsmeßhalters mit der Folge, daß auch das Spannen durch die Spannmittel symmetrisch erfolgt.

Eine Weiterbildung der Erfindung besteht darin, daß die Spannmittel eine diametral angeordnete drehbare Gewindestange mit zwei gegensinnigen Gewindeabschnitten aufweist, die jeweils mit einem komplementären Innengewinde in einem Zapfen in Wirkungsverbindung stehen, der um eine zu der Schwenkachse der Gelenke des einarmigen Hebels parallele Achse drehbar mit dem einarmigen Hebel zwischen dessen Gelenken verbunden ist. Die Federn sind Wendelfedern, die jeweils auf den Gewindeabschnitten angeordnet sind und sich jeweils mit dem radial nach außen gerichteten Ende an einem Anschlag auf der Gewindestange und mit dem anderen Ende an einem zentralen Widerlager an dem Grundkörper abstützen. Diese Ausführungsform ist besonders einfach und hat darüber hinaus den Vorteil, daß die Anschläge durch Muttern auf den Gewindeabschnitten gebildet werden können, durch die die symmetrische Ausrichtung der einarmigen Hebel einstellbar ist.

Die Arme sind zweckmäßigerweise jeweils von Winkelhebeln gebildet, deren andere Arme über Gelenke mit den als Druckfedern ausgebildeten Spannfedern verbunden sind, deren andere Enden über Gelenke mit dem Grundkörper verbunden sind. Diese Anordnung kann gemäß einer Weiterbildung dieser Ausführungsform so ausgeführt werden, daß die einarmigen Hebel und die als Druckfedern ausgebildeten Spannfedern jeweils eine Parallelführung bilden.

Gemäß einer Ausführungsform der Erfindung befinden sich in dem Grundkörper wenigstens zwei Gruppen von achsparallelen Bohrungen auf verschiedenen Kreisen unterschiedlichen Durchmessers und/oder in unterschiedlicher Zahl und im gleichen Umfangsabstand. In die Bohrungen sind jeweils eine Gruppe von Anlagestiften gleicher Länge einsteckbar. Auf diese Weise können die durch die Enden der Anlagestifte gebildeten Anlagepunkte bestimmten Anlagepunkten an der Felge oder Löchern in der Felge oder Zwischenräumen zwischen Speichen der Felge zugeordnet werden, so daß sie durch die Löcher oder Zwischenräume hindurchgreifen und mit ihren Enden an einer hinter der Felge angeordneten Bremsscheibe anliegen können, die eine exakte Bezugsebene darstellt und dazu eine parallele Halterung des Achsmeßhalters sicherstellt.

Um die zu einer Gruppe gehörenden Bohrungen leicht auffinden zu können, weisen diese gemäß einer Weiterbildung dieser Ausführungsform an ihren der Einsteckrichtung der Anlagestifte entgegengesetzten Enden jeweils eine Einsenkung auf, wobei die Einsenkungen einer Gruppe von Zentrierbohrungen untereinander gleiches Aussehen, die Einsenkungen verschiedener Gruppen von Bohrungen jedoch unterschiedliches Aussehen haben. Die Einsenkungen an den Bohrungen können zur Erzeugung eines unterschiedlichen Aussehens verschiedene Form und/oder Tiefe und/oder verschiedenen Durchmesser haben. Sie können auch zweckmäßigerweise eine unterschiedliche Farbe aufweisen. Bezüglich der Form der Einsenkungen ist eine Ausbildung als radialer Streifen vorteilhaft.

Anhand der Zeichnung soll die Erfindung näher erläutert werden.
- Fig. 1: zeigt ein Ausführungsbeispiel der Erfindung in Verbindung mit einem geschnitten dargestellten Fahrzeugrad in Radialansicht,
- Fig. 2: zeigt eine Abwandlung der Ausführungsform gemäß Fig. 1,
- Fig. 3: zeigt einen Schnitt III-III durch Fig. 2 und
- Fig. 4: zeigt einen Teilschnitt einer Einzelheit aus Fig. 2 im Bereich einer Bohrung.

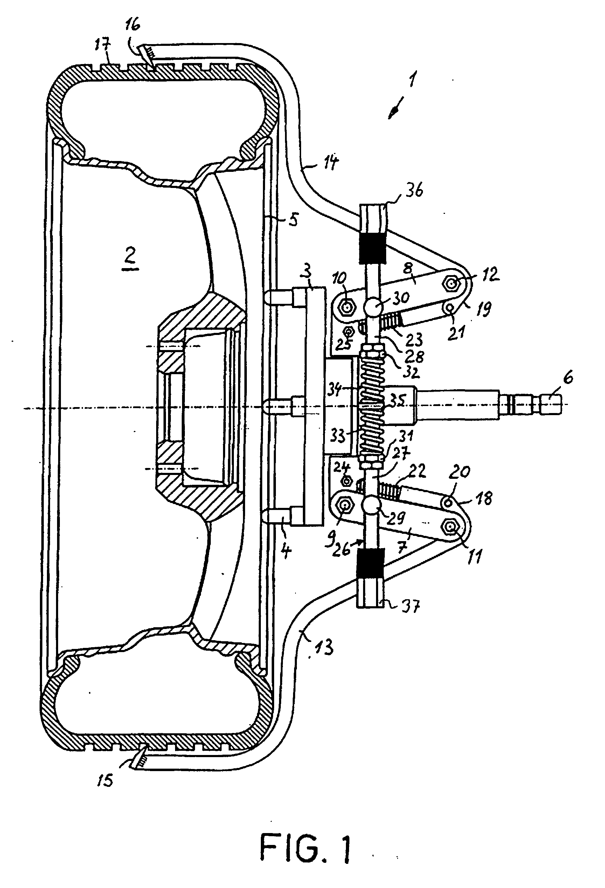

Fig. 1 zeigt einen Achsmeßhalter 1 in einer Lage, in der er an einem Fahrzeugrad 2 befestigt ist. Der Achsmeßhalter 1 weist einen Grundkörper 3 auf, an dem sich Anlagezapfen 4 zur Anlage an einer Felge 5 des Fahrzeugrades 2 befinden. An dem Grundkörper 3 befindet sich ein Achszapfen 6, an dem ein Meßkopf angebracht werden kann, mit dessen Hilfe die Ausrichtung des Fahrzeugrades 2 bzw. seiner Felge 5 meßbar ist und so in der gewünschten Weise hinsichtlich Sturz und Vorspur eingestellt werden kann.

An dem Grundkörper 3 sind einarmige Hebel 7, 8 mittels Gelenken 9, 10 angelenkt. An den freien Enden der einarmigen Hebel 7, 8 sind mittels Drehlagern 11, 12 Arme 13, 14 angelenkt, die sich diametral gegenüberliegen und an ihren Enden Haken 15, 16 aufweisen, die sich in das Profil eines Reifens 17 des Fahrzeugrades 2 einhaken können.

Die um die Drehlager 11 und 12 schwenkbaren Arme 13 und 14 bilden zusammen mit Armen 18, 19 jeweils einen Winkelhebel. Mit den Enden der Arme 18, 19 sind über Gelenke 20, 21 als Druckfedern ausgebildete Spannfedern 22, 23 verbunden, deren andere Enden über Gelenke 24, 25 mit dem Grundkörper 3 verbunden sind. Die Spannfedern 22, 23 bilden zusammen mit den einarmigen Hebeln 7, 8 Parallelführungen.

Eine Gewindestange 26 weist zwei gegensinnige Gewindeabschnitte 27, 28 auf, die jeweils mit komplementären Innengewinden in Zapfen 29, 30 in Wirkungsverbindung stehen, die drehbar an den einarmigen Hebeln 7 und 8 befestigt sind. Radial innerhalb von den Zapfen 29, 30 befinden sich auf den Gewindeabschnitten 27, 28 verstellbare Muttern 31, 32, die jeweils als Widerlager für Wendelfedern 33, 34 dienen, die auf den Gewindeabschnitten 27 und 28 angeordnet sind und sich jeweils an einem zentralen Widerlager 35 abstützen. An den Enden der Gewindestange 26 befinden sich Handgriffe 36, 37, mit deren Hilfe die Gewindestange 26 drehbar ist. Bei Drehung der Gewindestange 26 bewegen sich die Zapfen 29, 30 gegensinnig radial und damit auch die einarmigen Hebel 7 und 8 und schließlich auch die Arme 13 und 14 mit ihren Haken 15, 16 gegensinnig in radialer Richtung.

Um den Achsmeßhalter 1 an der Felge 5 des Fahrzeugrades 2 zu befestigen, wird zunächst die Gewindestange 26 mittels eines der Handgriffe 36 oder 37 oder mittels beider Handgriffe 36, 37 so gedreht, daß die lichte Weite zwischen den Haken 15, 16 etwas größer ist als der Außendurchmesser des Reifens 17. Danach wird der Grundkörper 3 mit den Anlagezapfen 4 in axialer Richtung zur Anlage an der Felge 5 gebracht und in dieser Lage so lange gehalten, bis durch Drehen der Gewindestange 26 sich die Haken 15 und 16 in das äußere Profil des Reifens 17 einhaken. Wird jetzt die Gewindestange 26 noch weiter gedreht, so werden die Haken 15, 16 mit Kraft gegen den Reifen 17 gezogen, wobei die Reaktionskraft durch die Spannfedern 22, 23 erzeugt wird. Die Anlage der Haken 15, 16 an den Reifen 17 erfolgt daher elastisch. Bei diesem Spannen wird neben der radial von den Haken 15, 16 ausgeübten Kraft auch eine axial wirkende Kraft erzeugt, und zwar dadurch, daß die Drehlager 11, 12 eine Kreisbahn um die Gelenke 9, 10 beschreiben und dadurch sich die Arme 13, 14 nicht nur radial nach innen, sondern auch axial von dem Fahrzeugrad 2 weg bewegen. Im Ergebnis werden also die Haken 15, 16 in elastischer Anlage an dem Profil des Reifens 17 gehalten und gleichzeitig der Grundkörper 3 mit seinen Anlagezapfen 4 elastisch gegen die Felge 5 gezogen.

Die Wendelfedern 33, 34 haben gleiche Stärke und Charakteristik, und die Muttern 31, 32 sind so eingestellt, daß die Zapfen 29, 30 gleichen radialen Abstand von dem zentralen Widerlager 35 haben. Aufgrund ihrer gleichen Stärke und Federcharakteristik halten die Wendelfedern 33, 34 dadurch nicht nur die Zapfen 29, 30 in jeder Einstellage der Gewindestange 26 in immer gleichem Abstand zu dem zentralen Widerlager 35, sondern auch damit die einarmigen Hebel 7, 8, die Spannfedern 22, 23 und damit auch die Arme 13, 14 mit ihren Haken 15, 16 immer in symmetrischer Lage zu dem Achszapfen 6 mit der Folge, daß bei der Befestigung des Meßkopfes dieser in axialsymmetrischer Lage gehalten und auch in dieser Lage gegen die Felge 5 des Fahrzeugrades 2 gezogen wird. Dadurch ist das Ansetzen und Festziehen des Achsmeßhalters beträchtlich erleichtert.

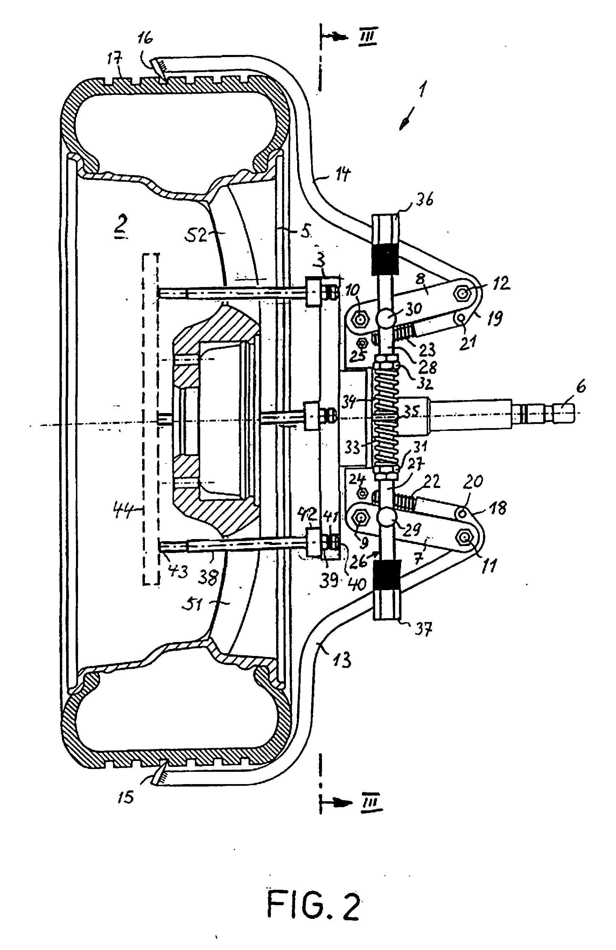

Fig. 2 zeigt eine Abwandlung der Ausführungsform gemäß Fig. 1. Gleiche oder sich entsprechende Teile sind mit gleichen Bezugsziffern versehen. Der Unterschied besteht darin, daß die Anlagezapfen 4 in Fig. 1 durch Anlagestifte 38 ersetzt sind, die Zapfen 39 aufweisen, die in komplementäre Bohrungen 40 in dem Grundkörper 3 eingesteckt sind, wobei ein in eine Nut eingesetzter O-Ring 41 den Zapfen 39 in der Bohrung hält und gleichzeitig ein leichtes Einstecken und Herausziehen ermöglicht. Die Anlagestifte 38 weisen Flansche 42 auf, die nach Einstecken der Zapfen 39 an der dem Fahrzeugrad 2 zugewandten Seite des Grundkörpers 3 anliegen. Alle Anlagestifte 38 haben gleiche Länge, so daß ihre Enden 43 in gleicher Ebene an einer durch gestrichelte Linien dargestellten Bremsscheibe 44 anliegen. Auf diese Weise ist sichergestellt, daß nach Befestigung des Achsmeßhalters der Grundkörper 3 exakt parallel zur Bremsscheibe 44 verläuft.

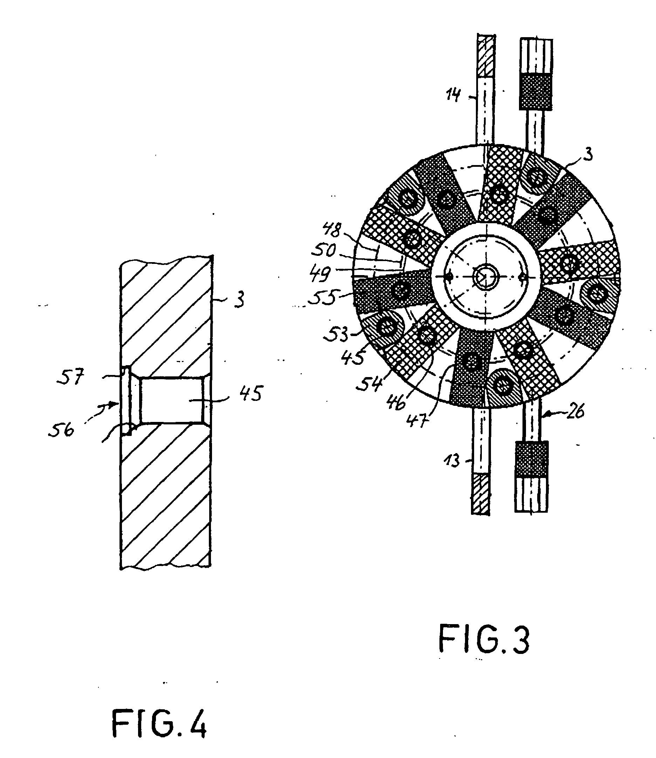

Fig. 3 zeigt einen Schnitt III-III durch Fig. 3. Fig. 3 zeigt also im wesentlichen eine Axialansicht auf den Grundkörper 3 von dem Fahrzeugrad 2 her. Damit ist in Fig. 3 zu erkennen, daß sich in dem Grundkörper 3 drei Gruppen von Bohrungen 45, 46, 47 befinden, die sich jeweils auf Kreisen 48, 49 und 50 befinden und in Umfangsrichtung untereinander jeweils gleichen Abstand haben. Auf diese Weise ist es möglich, durch Einstecken der Anlagestife 38 in unterschiedliche Gruppen von Bohrungen 45, 46 oder 47 die radiale Lage der Anlagestifte 38 jeweils den Felgen 5 eines Fahrzeugrades 2 anzupassen, beispielsweise bei der Ausführungsform gemäß Fig. 2 dergestalt, daß die Anlagestifte 38 durch die Zwischenräume zwischen Speichen 51, 52 der Felge 5 des Fahrzeugrades 2 ragen und in der gewünschten Weise mit ihren Enden 43 an der Bremsscheibe 44 anstoßen können.

Wie aus Fig. 3 ersichtlich, sind die Gruppen von Bohrungen 45, 46 und 47 jeweils mit Markierungen in Form von radialen, streifenförmigen Einsenkungen 53, 54 und 55 versehen, um so beim Einstecken der Anlagestifte 38 jeweils die zu einer Gruppe gehörenden Bohrungen 45, 46 oder 47 auffinden zu können.

Fig. 4 zeigt einen vergrößerten Teilschnitt durch den Grundkörper 3 im Bereich einer Bohrung 45 in Fig. 3. Es ist zu erkennen, daß die Bohrung 45 in durch einen Pfeil 56 angedeuteter Einsteckrichtung für einen Anlagestift 38 eine Einsenkung 57 aufweist, die, was in der Zeichnung nicht erkennbar ist, farbig markiert ist. Durch die Einsenkung 57 kann die Farbschicht kaum beschädigt werden, so daß sie dauerhaft sichtbar ist und so jeweils die zu einer Gruppe gehörenden Bohrungen durch unterschiedliche Farbmarkierungen leicht auffindbar sind.

## Patentansprüche

1. Achsmeßhalter zur Befestigung eines Meßkopfes an einer Felge (5) eines Fahrzeugrades (2), mit einem Grundkörper (3) zur direkten oder indirekten stabilen Anlage an der Felge (5) des Fahrzeugrades (2), mit zwei diametral gegenüberliegend angeordneten Armen (13, 14), die an ihren radial nach außen weisenden Enden jeweils Haken (15, 16) zum Einhaken in ein Profil eines Reifens (17) aufweisen und die mit ihren radial nach innen gerichteten Enden jeweils mittels eines Drehlagers (11, 12) an einem von dem Grundkörper (3) weg weisenden Ende eines einarmigen Hebels (7, 8) angelenkt und über ein Gelenk (20, 21) und Spannfedern (22, 23) mit dem Grundkörper (3) verbunden sind, und mit Spannmitteln, mit denen die einarmigen Hebel (7, 8) radial nach innen spannbar sind, **dadurch gekennzeichnet, daß** die einarmigen Hebel (7, 8) jeweils radial nach außen durch Zentrierfedern (33, 34) vorgespannt sind, die gleiche Stärke und Charakeristik haben und sich an einem zentralen Punkt des Grundkörpers (3) abstützen.

2. Achsmeßhalter nach Anspruch 1, **dadurch gekennzeichnet, daß** die Spannmittel eine diametral angeordnete drehbare Gewindestange (26) mit zwei gegensinningen Gewindeabschnitten (27, 28) aufweisen, die jeweils mit einem komplementären Innengewinde in einem Zapfen (29, 30) in Wirkungsverbindung stehen, der um eine zu der Schwenkachse des Gelenks (9, 10) des einarmigen Hebels (7, 8) parallele Achse drehbar mit dem einarmigen Hebel (7, 8) zwischen dessen Gelenk (9, 10) und Drehlager (11, 12) verbunden ist, und daß die Zentrierfedern Wendelfedern (33, 34) sind, die jeweils auf den Gewindeabschnitten (27, 28) angeordnet sind und sich jeweils mit dem radial nach außen gerichteten Ende an einem Anschlag auf der Gewindestange (26) und mit dem anderen Ende an einem zentralen Widerlager (35) an dem Grundkörper (3) abstützen.

3. Achsmeßhalter nach Anspruch 1, **dadurch gekennzeichnet, daß** die Arme (13, 14) jeweils Teile von Winkelhebeln sind, deren andere Arme (18, 19) über Gelenke (20, 21) mit den als Druckfedern ausgebildeten Spannfedern (22, 23) verbunden sind, deren andere Enden über Gelenke (24, 25) mit dem Grundkörper (3) verbunden sind.

4. Achsmeßhalter nach Anspruch 3, **dadurch gekennzeichnet, daß** die einarmigen Hebel (7, 8) und die Spannfedern (22, 23) jeweils eine Parallelführung bilden.

5. Achsmeßhalter nach Anspruch 1, **dadurch gekennzeichnet, daß** in dem Grundkörper (3) wenigstens zwei Gruppen von achsparallelen Bohrungen (45, 46) auf verschiedenen Kreisen (48, 49) unterschiedlichen Durchmessers und/oder in unterschiedlicher Zahl und in gleichem Umfangsabstand angeordnet sind, in die jeweils eine Gruppe von Anlagestiften (38) gleicher Länge einsteckbar sind.

6. Achsmeßhalter nach Anspruch 5, **dadurch gekennzeichnet, daß** die Anlagestifte (38) eine solche Länge haben, daß sie sich bei dem an dem Fahrzeugrad (2) befestigten Achsmeßhalter (1) durch die Felge (5) des Fahrzeugrades (2) hindurcherstrecken und mit ihren Enden (43) gegen eine im Innenbereich der Felge (5) angeordnete Bremsscheibe (44) stoßen.

7. Achsmeßhalter nach Anspruch 5, **dadurch gekennzeichnet, daß** die Bohrungen (45, 46, 47) an ihren der Einsteckrichtung der Anlagestifte (38) entgegengesetzten Enden jeweils eine Einsenkung (53, 54, 55) aufweisen, wobei die Einsenkungen (53, 54, 55) einer Gruppe von Bohrungen (45, 46, 47) untereinander gleiches Aussehen, die Einsenkungen (53, 54, 55) verschiedener Gruppen von Bohrungen (45, 56, 47) jedoch unterschiedliches Aussehen haben.

8. Achsmeßhalter nach Anspruch 7, **dadurch gekennzeichnet, daß** die Einsenkungen (53, 54, 55) Bohrungen (45, 46, 47) zur Erzeugung eines unterschiedlichen Aussehens verschiedene Form und/oder Tiefe und/oder verschiedenen Durchmesser haben.

9. Achsmeßhalter nach Anspruch 7, **dadurch gekennzeichnet, daß** die Einsenkungen (53, 54, 55) verschiedener Gruppen von Bohrungen (45, 46, 47) eine unterschiedlich farbige Oberfläche haben.

10. Achsmeßhalter nach Anspruch 7, **dadurch gekennzeichnet, daß** die Einsenkungen (53, 54, 55) die Form radialer Streifen haben.

## Claims

1. An axle measurement holder to fasten a measuring head onto a rim (5) of a vehicle wheel(2), with a base body (3) for direct or indirect stable contact with the rim (5) of the vehicle wheel (2), with two diametrically oppositely arranged arms (13, 14), which feature hooks (15, 16) on their ends directed radially outward, for the purpose of hooking onto the tread of a tire (17), and which, at their ends which are directed radially inward, are respectively articulated by mean of a pivot bearing (11, 12) to an end of a one armed lever (7, 8 ) that is directed away from the base body (3) and connected to the base body (3) by means of an articulation (20, 21) and compression springs(22, 23), and by clamping means by means of which the one armed levers(7, 8) can be tensed radially inward, **characterized by** the fact that the one armed levers (7, 8) are respectively preloaded radially outward by means of centering springs (33, 34) which exert the same force and have the same characteristics and are supported on a central point of the base body (3).

2. An axle measurement holder according to claim 1, **characterized by** the fact that the means for clamping feature a diametrically arranged rotatable threaded bar (26) with two opposite threaded sections (27, 28) which are in operating contact with a complementary inner thread in a journal (29, 30), said journal being rotatably connected with the one armed levers (7, 8) between its articulation (9, 10) and pivot bearing (11, 12) by means of an axis parallel to the swivel axis of the articulation (9, 10) of the one armed lever (7, 8), and that the centering springs are coil springs which are respectively arranged on the threaded sections (27, 28) and are respectively supported on the radially outward directed ends on a stop on the threaded bar (26), and are supported at the other end on a central support (35) on the base body (3).

3. An axle measurement holder according to claim 1, **characterized by** the fact that the arms (13, 14) are respectively part of the angled levers, the other arms (18, 19) of which are connected by means of articulations (20, 21) with tension springs (22, 23) constructed as compression springs, the other ends of which are connected by means of articulations (24, 25) with the base body (3).

4. An axle measurement holder according to claim 3, **characterized by** the fact that the one armed levers (7, 8) and the tension springs (22, 23) respectively form a parallel guide.

5. An axle measurement holder according to claim 1, **characterized by** the fact that at least two groups of bore holes (45, 46) with parallel axes are arranged on different circles (48, 49) with differing diameters and/or in varying number and at the same circumferential distance on the base body (3), into which a respective group of contact pins (38) of the same length are inserted.

6. An axle measurement holder according to claim 3, **characterized by** the fact that the contact pins (38) are of such length that they extend through the rim (5) of the vehicle wheel (2) at the axle measurement holder (1) that is fastened to the vehicle wheel (2) and push against a brake disc (44) arranged at the inner area of the rims (5) with their ends (43).

7. An axle measurement holder according to claim 5, **characterized by** the fact that the bore holes (45, 46, 47) respectively feature a depression (53, 54, 55) on their ends opposite the insertion direction of the contact pins (38), whereby the depressions (53, 54, 55) of one group of bore holes (45, 46, 47) appear the same, the depressions (53, 54, 55) of differing groups of bore holes (45, 56, 47), however, appear different.

8. An axle measurement holder according to claim 7, **characterized by** the fact that the depressions (53, 54 55) for the bore holes (45, 46, 47) have a different appearance, different forms and or different depths and/or different diameters, in order to generate a different appearance.

9. An axle measurement holder according to claim 7, **characterized by** the fact that the depressions (53, 54, 55) of different groups of bore holes (45, 46, 47) have a different colored surface.

10. An axle measurement holder according to claim 7, **characterized by** the fact that the depressions (53, 54, 55) have the form of radial strips.

## Revendications

1. Support de mesure d'axe pour fixer une tête de mesure sur une jante (5) d'une roue de véhicule (2), avec un corps de base (3) pour une disposition stable directe ou indirecte sur la jante (5) de la roue de véhicule (2), avec deux bras (13, 14) disposés diamétralement opposés qui présentent, à leurs extrémités indiquant radialement l'extérieur, respectivement des crochets (15, 16) pour s'accrocher dans un profil d'un pneu (17), et qui sont articulés avec leurs extrémités dirigées, radialement, vers l'intérieur, respectivement au moyen d'un palier de pivotement (11, 12) sur une extrémité, 'éloignée du corps de base (3), d'un levier à bras unique (7, 8), et qui sont reliés par une articulation (20, 21) et des ressorts (22, 23) au corps de base (3) et, avec des moyens de contrainte avec lesquels les leviers à bras unique (7, 8) peuvent être contraints radialement vers l'intérieur,
**caractérisé en ce que** les leviers à bras unique (7, 8) sont respectivement précontraints de manière radiale vers l'extérieur par des ressorts de centrage (33, 34) qui ont les mêmes force et caractéristique et s'appuient sur un point central du corps de base (3).

2. Support de mesure d'axe selon la revendication 1,
**caractérisé en ce que** les moyens de contrainte présentent une tige filetée (26) diamétralement disposée rotative avec deux sections de tige (27, 28) en sens inverse, qui sont respectivement en liaison fonctionnelle avec un taraudage complémentaire dans un tourillon (29, 30) lequel est lié à rotation avec le levier à bras unique (7, 8), entre son articulation (9, 10) et le palier de pivotement (11, 12), autour d'un axe parallèle à l'axe de pivotement de l'articulation (9, 10) du levier à bras unique (7, 8), et **en ce que** les ressorts de centrage sont des ressorts de renvoi (33, 34) qui sont disposés respectivement sur les sections de tige filetée (27, 28) et s'appuient respectivement avec leur extrémité dirigée vers l'extérieur sur une butée de la tige filetée (26) et avec leur autre extrémité sur une butée centrale (35) du corps de base (3).

3. Support de mesure d'axe selon la revendication 1,
**caractérisé en ce que** les bras (13, 14) sont respectivement des parties de leviers coudés, dont les autres bras (18, 19) sont reliés, par des articulations (20, 21), avec les ressorts (22, 23) réalisés sous forme de ressorts de poussée dont les autres extrémités sont en liaison avec le corps de base (3) par des articulations (24, 25).

4. Support de mesure d'axe selon la revendication 3,
**caractérisé en ce que** les leviers à bras unique (7, 8) et les ressorts (22, 23) formem ensemble un parallélogramme.

5. Support de mesure d'axe selon la revendication 1,
**caractérisé en ce que**, dans le corps de base (3), au moins deux groupes d'alésages (45, 46) parallèles à l'axe sont disposés sur des cercles différents (48, 49) de diamètres différents et/ou en nombre différent et à même espacement périphérique, alésages dans lesquels un groupe de broches d'installation (38) de même longueur sont respectivement enfichables.

6. Support de mesure d'axe selon la revendication 5,
**caractérisé en ce que** les broches d'installation (38) ont une longueur telle que, dans le support de mesure d'axe (1) fixé sur la roue de véhicule (2), elles s'étendent au travers de la jante (5) de la roue du véhicule (2) et buttent avec leurs extrémités (43) contre un disque de frein (44) disposé dans la zone intérieure de la jante (5).

7. Support de mesure d'axe selon la revendication 5,
**caractérisé en ce que** les alésages (45, 46, 47) présentent respectivement à leurs extrémités opposées à la direction d'enfichage de la broche d'installation (38) un enfoncement (53, 54, 55), les enfoncements (53, 54, 55) d'un groupe d'alésages (45, 46, 47) ayant une même apparence entre eux, les enfoncements (53, 54, 55) de groupes différents d'alésages (45, 46, 47) ayant cependant des apparences différentes.

8. Support de mesure d'axe selon la revendication 7,
**caractérisé en ce que** les enfoncements (53, 54, 55) des alésages (45, 46, 47) ont une forme et/ou une profondeur différentes et/ou un diamètre différent pour créer une apparence différente.

9. Support de mesure d'axe selon la revendication 7,
**caractérisé en ce que** les enfoncements (53, 54 ,55) de groupes différents d'alésages (45, 46, 47) ont une surface colorée différente.

10. Support de mesure d'axe selon la revendication 7,
**caractérisé en ce que** les enfoncements (53, 54, 55) ont la forme de bandes radiales.
